# EUROPEAN PATENT APPLICATION

(11) **EP 4 654 304 A1**
(43) Date of publication of application: **26.11.2025**
(21) Application number: 24757287.8
(22) Date of filing: 15.02.2024
(51) Int. Cl.: H01M 8/04119

(54) **MEMBRANE HUMIDIFIER FOR FUEL CELL**

(30) Priority: 16.02.2023 KR 20230020910
(71) Applicant: Kolon Industries, Inc., Seoul 07793 (KR)
(72) Inventor: KIM, Do Woo, Seoul 07793 (KR); CHOI, Woo Chul, Seoul 07793 (KR); HER, Jung Kun, Seoul 07793 (KR); KI, Sung Kwan, Seoul 07793 (KR)
(74) Representative: Vossius & Partner Patentanwälte Rechtsanwälte mbB
(86) International application number: PCT/KR2024/095236
(87) International publication number: WO 2024/172568

(57) **Abstract**

The present disclosure relates to a membrane humidifier for a fuel cell. The membrane humidifier for a fuel cell includes: a housing having an inlet formed on one side through which a moisture-containing off-gas is introduced and having an outlet formed on another side through which the moisture-containing off-gas introduced through the inlet is discharged; a first cap coupled to the one side of the housing and into which external air is introduced; a plurality of hollow fiber membranes provided inside the housing, through which the external air introduced through the first cap flows, and in which the moisture-containing off-gas comes into contact with an outer surface to humidify the external air; an ejection unit that causes the moisture-containing off-gas introduced through the inlet to flow toward the outlet using air pressure under a predetermined condition; and a second cap coupled to the other side of the housing and in which the external air is humidified and discharged while flowing through the hollow fiber membranes.

## Description

### Technical Field

The present disclosure relates to a membrane humidifier for a fuel cell that prevents excessively humidified air from being introduced into the stack during the initial operation or the low-output period.

### Background Art

A fuel cell produces electrical energy using chemical energy generated by the combination of hydrogen and oxygen. Fuel cells have been actively studied recently as an eco-friendly energy source with low emission of pollutants.

Fuel cells may be classified into a polymer electrolyte membrane fuel cell (PEMFC), a phosphoric acid fuel cell (PAFC), a molten carbonate fuel cell (MCFC), a solid oxide fuel cell (SOFC), an alkaline fuel cell (AFC), and the like according to the type of electrolyte to be used.

Each of the fuel cells basically operates on the same principle, but differs in the type of fuel used, operation temperature, catalyst, electrolyte, and the like. Among these, the polymer electrolyte membrane fuel cell (PEMFC) operates at lower temperatures compared to other fuel cells and can be small in size due to high output density. Therefore, the polymer electrolyte membrane fuel cell (PEMFC) is known to be the most promising for small-scale stationary power generation device as well as for the transportation system.

One of the most important factors for improving a performance of the polymer electrolyte membrane fuel cell (PEMFC) is to maintain a moisture content by supplying moisture equal to or more than a certain amount to the polymer electrolyte membrane (or proton exchange membrane: PEM) of the membrane electrode assembly (MEA). In a case where the polymer electrolyte membrane is dried, the power generation efficiency rapidly decreases.

Methods for humidifying a polymer electrolyte membrane include 1) a bubbler humidification method in which water is filled in a pressure vessel and a target gas is passed through a diffuser to supply moisture, 2) a direct injection method in which a supply amount of moisture required for the fuel cell reaction is calculated and moisture is directly supplied to the gas flow pipe through a solenoid valve, and 3) a membrane humidification method in which moisture is supplied to the gas fluidized bed using a polymer separation membrane. Among these, a membrane humidification method in which the polymer electrolyte membrane is humidified by providing water vapor to air supplied to the polymer electrolyte membrane using a membrane that selectively permeates only water vapor contained in the discharge gas, is advantageous in that the humidifier can be made lighter and smaller.

A hollow fiber membrane with a large permeable area per unit volume is preferable as the selectively permeable membrane used in the membrane humidification method in a case of forming a module. In a case where a humidifier is manufactured using the hollow fiber membrane, it is advantageous in that a fuel cell can be sufficiently humidified even with a small capacity since the high integration of a hollow fiber membrane with a large contact surface area is possible, the cost is relatively low, and the moisture and heat contained in the discharge gas (off-gas) discharged at a high temperature from the fuel cell can be recovered and reused through the humidifier.

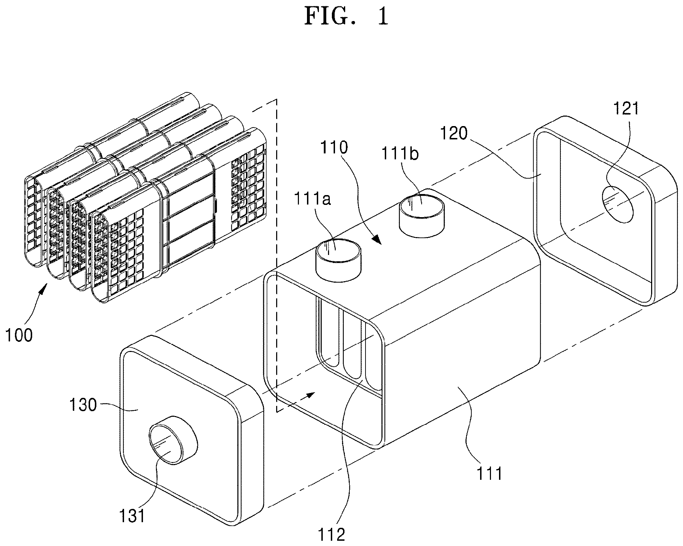

FIG. 1 is a schematic exploded perspective view of a membrane humidifier for a fuel cell in the related art. With reference to FIG. 1, a membrane humidification-type humidifier in the related art includes a humidifying module 110 in which moisture exchange occurs between air supplied from the outside and the discharge gas discharged from a fuel cell stack (not shown), and first and second caps 120 and 130 respectively coupled to both ends of the humidifying module 110.

External air is introduced through an introduction hole 121 of the first cap 120 and transferred to the humidifying module 110, and air humidified by the humidifying module 110 is transferred to the fuel cell stack through a discharge hole 131 of the second cap 130. The humidifying module 110 includes a housing 111 having a moisture-containing off-gas inlet 111a through which wet discharge gas is introduced and a moisture-containing off-gas outlet 111b through which the discharge gas is discharged, and a cartridge 100 disposed in the housing 111.

The cartridge 100 is fastened to a fastening unit 112 of the housing 111. A plurality of the cartridges 100 may be fastened to the fastening unit 112. The inside of the cartridge 100 is filled with a hollow fiber membrane, and both end portions of the hollow fiber membrane are potted and fixed to both end portions of the cartridge 100. The hollow fiber membrane may be potted by curing a liquid polymer such as a liquid polyurethane resin.

Air supplied from the outside is introduced through the first cap 120 and flows through hollows of the hollow fiber membranes. The discharge gas introduced into the housing 111 through moisture-containing off-gas inlet 111a comes into contact with outer surfaces of the hollow fiber membranes and then flows out from the housing 111 through moisture-containing off-gas outlet 111b. When the discharge gas comes into contact with the outer surfaces of the hollow fiber membranes, moisture contained in the discharge gas permeates the hollow fiber membranes to humidify air flowing through hollows of the hollow fiber membranes.

In this way, humidification is performed through the process in which the moisture-containing off-gas introduced through the moisture-containing off-gas inlet 111a comes into contact with the outer surface of the hollow fiber membrane disposed inside the cartridge 100. The plurality of cartridges 100 are disposed to be adjacent to each other and the moisture-containing off-gas is introduced into the cartridge 100 through a window formed in the cartridge 100 by being introduced between the cartridges 100.

As described above, the membrane humidifier uses the moisture-containing off-gas discharged from the stack to humidify the external air and supply the humidified external air to the stack. However, in a case where the external air is excessively humidified, the over-humidified air is introduced into the stack, which causes a problem in that the power generation efficiency of the fuel cell is decreased. In particular, over-humidification by the moisture-containing off-gas is a problem during the initial operation or when the engine output is low.

### Disclosure of Invention

### Technical Problem

The present disclosure has been made in view of solving the above-described problems, and an object of the present disclosure is to provide a membrane humidifier for a fuel cell that prevents excessively humidified air from being introduced into a stack during the initial operation or the low-output period.

### Solution to Problem

A membrane humidifier for a fuel cell according to an embodiment of the present disclosure includes: a housing having an inlet formed on one side through which a moisture-containing off-gas is introduced and having an outlet formed on another side through which the moisture-containing off-gas introduced through the inlet is discharged; a first cap coupled to the one side of the housing and through which external air is introduced; a plurality of hollow fiber membranes provided inside the housing, through which the external air introduced through the first cap flows, and in which the moisture-containing off-gas comes into contact with an outer surface to humidify the external air; an ejection unit that causes the moisture-containing off-gas introduced through the inlet to flow toward the outlet using air pressure under a predetermined condition; and a second cap coupled to the other side of the housing and in which the external air is humidified and discharged while flowing through the hollow fiber membranes.

In addition, the plurality of hollow fiber membranes may be provided inside a cartridge that is detachably coupled to the housing, a fastening unit for fastening the cartridge may be provided in the housing, a bypass hole through which the moisture-containing off-gas introduced through the inlet flows toward the outlet may be formed in the fastening unit, and the ejection unit may eject air pressure toward the bypass hole.

In addition, air pressure of the ejection unit may be provided by being branched before the external air is introduced through the first cap.

In addition, the membrane humidifier for a fuel cell may further include: a branch flow path provided at a front end of the first cap to branch the external air toward the ejection unit; and a flow rate control valve provided in the branch flow path to control a flow rate of the branched external air.

In addition, the ejection unit may be provided with a plurality of ejection holes that provide air pressure, and the ejection holes may be provided to be spaced apart in a horizontal direction.

In addition, each of the ejection holes may be aligned to face the bypass hole.

In addition, the membrane humidifier for a fuel cell may further include: a control unit that controls a flow rate supplied by the ejection unit.

In addition, the control unit 1) may provide air pressure by the ejection unit until 1 minute after startup, or 2) may provide air pressure by the ejection unit until a flow rate of the moisture-containing off-gas introduced through the inlet reaches 2,000 slpm after the start.

In addition, a flow rate provided by the ejection unit may gradually decrease until a predetermined time after a vehicle is started.

In addition, a flow rate provided by the ejection unit may gradually decrease until a flow rate of the moisture-containing off-gas introduced through the inlet reaches a predetermined set value after a vehicle is started.

### Advantageous Effects of Invention

The membrane humidifier for a fuel cell according to an embodiment of the present disclosure provides an effect of preventing over-humidification by bypassing the moisture-containing off-gas introduced into the housing during the initial operation or the low-output period before being introduced into the hollow fiber membrane.

In addition, since the moisture-containing off-gas is pushed toward a bypass hole by the ejection unit using air pressure and discharged, the membrane humidifier provides an effect of bypassing the moisture-containing off-gas with a relatively simple configuration.

In addition, since air pressure of the ejection unit branches and uses external air introduced into the housing from the outside, the membrane humidifier provides an effect of preventing external air from being excessively introduced into the stack during the initial operation or the low-output period.

### Brief Description of Drawings

FIG. 1 is an exploded perspective view of a membrane humidifier in the related art,
FIG. 2 is a side view of a membrane humidifier according to one embodiment of the present disclosure,
FIG. 3 is a cross-sectional view taken along line A-A in FIG. 2,
FIG. 4 is a cross-sectional view taken along line B-B in FIG. 2,
FIG. 5 is a perspective view of an ejection unit,
FIG. 6 is a cross-sectional view taken along line C-C in FIG. 5,
FIG. 7 is a cross-sectional view of a cartridge,
FIG. 8 is a block diagram according to the one embodiment of the present disclosure,
   and
FIG. 9 is a cross-sectional view of a membrane humidifier according to another embodiment of the present disclosure.

### Mode for Carrying out the Invention

Hereinafter, various embodiments of the present disclosure will be described with reference to the accompanying drawings. Various embodiments of the present disclosure may have various modifications and various embodiments, and specific embodiments are illustrated in the drawings and detailed descriptions thereof are described. However, various embodiments of the present disclosure are not limited to specific embodiments, and it should be understood that various embodiments include all modifications and/or equivalents or substituents included in the spirit and technical scope of various embodiments of the present disclosure. In the description of the drawings, the same components are assigned with the same reference numerals.

Expressions such as "include" or "may include" that can be used in various embodiments of the present disclosure indicate the presence of a function, an operation, or a component that has been disclosed, and do not limit one or more additional functions, operations, or components. In addition, it should be understood that terms such as "include" or "have" in various embodiments of the present disclosure are intended to specify the presence of a feature, a number, a step, an operation, a component, a part, or a combination thereof described in the specification, but do not exclude the possibility of the presence or addition of one or more other features, numbers, steps, operations, components, parts, or combinations thereof.

When a component is referred to as being "connected" to another component, it should be understood that the component may be directly connected to the other component, but a new other component may be present between the component and the other component. On the other hand, when a component is referred to as being "directly connected" or "directly coupled" to another component, it should be understood that a new other component is not present between the component and the other component.

The terms used in various embodiments of the present disclosure are merely used to describe specific embodiment, and are not intended to limit the various embodiments of the present disclosure. The singular expression includes the plural expression unless otherwise specified.

Unless otherwise defined, all terms used herein, including technical or scientific terms, have the same meaning as commonly understood by a person skilled in the art to which various embodiments of the present disclosure belong.

Terms defined in commonly used dictionaries should be interpreted as having a meaning consistent with the meaning they have in the context of the relevant technology, and should not be interpreted in an ideal or excessively formal meaning unless explicitly defined in various embodiments of the present disclosure.

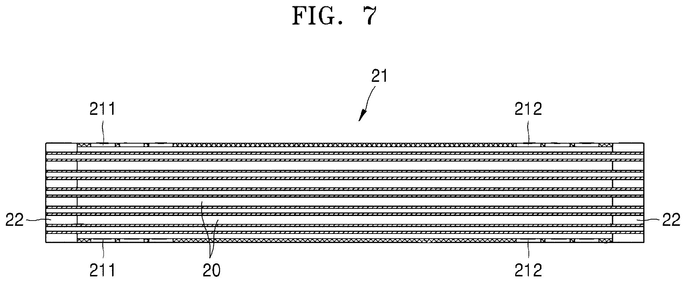

The present disclosure relates to a membrane humidifier that humidifies dry gas supplied from the outside using moisture-containing moisture-containing off-gas discharged from a fuel cell stack. In particular, the present disclosure relates to a membrane humidifier for a vehicle. The present disclosure may include a housing 111 and first and second caps 120 and 130 that constitute a membrane humidifier in the related art as shown in FIG. 1. More specifically, the present disclosure may include a housing 111 in which a hollow fiber membrane is disposed therein as in the related art, and first and second caps 120 and 130 that are coupled to both end portions of the housing 111. The housing 111 has a moisture-containing off-gas inlet 111a formed on one side through which a moisture-containing off-gas is introduced and is formed with a moisture-containing off-gas outlet 111b on another side through which the moisture-containing off-gas introduced through the inlet 111a is discharged. As shown in FIG. 1, the first and second caps 120 and 130 may be coupled to both ends of the housing 111, respectively. The first cap 120 is coupled to one side of the housing 111, and external air is introduced through the first cap 120. The second cap 130 is coupled to the other side of the housing 111, and the external air is humidified and discharged while flowing through the hollow fiber membranes. The hollow fiber membrane may be filled into a cartridge and detachably coupled to the housing 111. Both end portions of the hollow fiber membrane and the cartridge are potted and fixed by a potting layer 22 (see FIG. 7). On the other hand, the wet discharge gas discharged from the stack is introduced into the cartridge 100 inside the housing 111, and when the external air flows through the hollow fiber membrane 20, the moisture-containing off-gas flows through an outer surface of the hollow fiber membrane 20. When the moisture-containing off-gas comes into contact with the outer surface of the hollow fiber membrane 20, moisture is transferred to the inside of the hollow fiber membrane 20 and the external air is humidified, and the humidified external air may be supplied to the fuel cell stack through the second cap 130. According to an embodiment, the hollow fiber membrane is provided in the form of a plurality of cartridges, but the form in which the hollow fiber membrane is provided inside the housing is not limited to the form of a plurality of cartridges.

Hereinafter, a preferred embodiment according to the present disclosure will be described in detail with reference to the accompanying drawings. A membrane humidifier 1 according to an embodiment of the present disclosure includes a housing 10, a hollow fiber membrane 20, a first cap 30, a second cap 40, and an ejection unit 50.

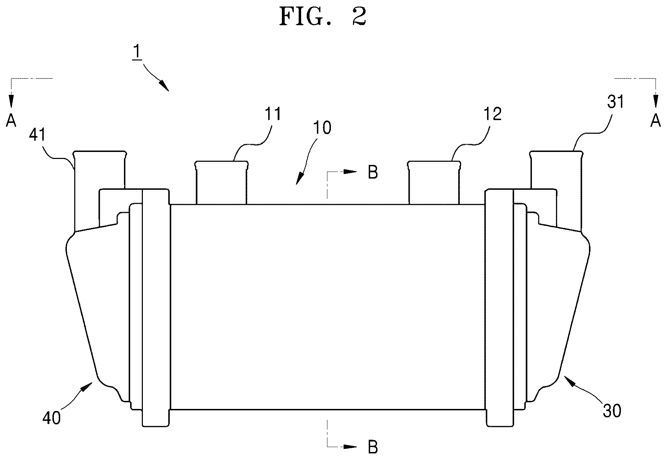

As shown in FIG. 2, the housing 10 has an inlet 11 formed on one side through which a moisture-containing off-gas is introduced and is formed with an outlet 12 on the other side through which the moisture-containing off-gas introduced through the inlet 11 is discharged. The housing 10 provides a space in which the hollow fiber membrane 20 is disposed, and provides a space into which the moisture-containing off-gas is introduced and transfers moisture of the moisture-containing off-gas to the external air. With reference to FIG. 2, the inlet 11 and the outlet 12 are provided on an upper surface side of the housing 10. The formation positions of the inlet 11 and the outlet 12 are not limited thereto.

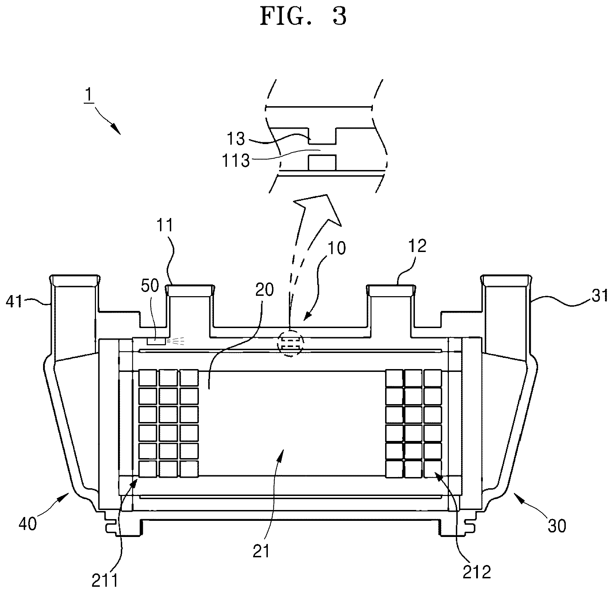

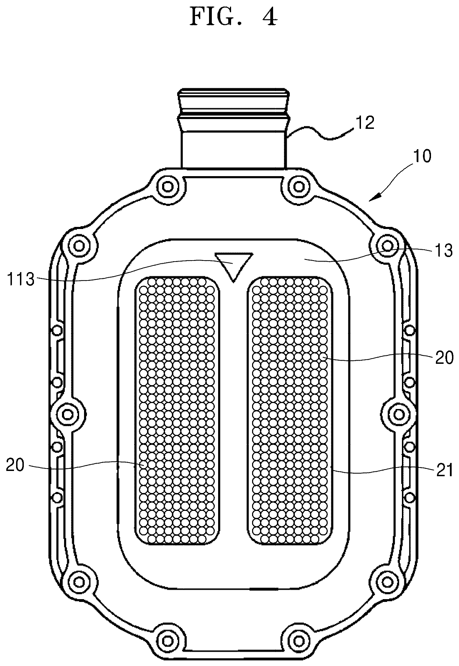

The hollow fiber membrane 20 is accommodated inside the housing 10. The external air flows through the inside of the hollow fiber membrane 20, and moisture-containing off-gas comes into contact with the outer surface. When the moisture-containing off-gas comes into contact with the outer surface of the hollow fiber membrane 20, the moisture penetrates into the hollow fiber membrane 20, and the external air is humidified. According to an embodiment, as shown in FIGS. 3 and 4, the hollow fiber membrane 20 is provided in the form of a cartridge 21. The cartridge 21 with which the hollow fiber membrane 20 is coupled inside may be detachably mounted on the housing 10.

The hollow fiber membrane 20 is disposed inside the cartridge 21, and both end portions of the cartridge 21 and both end portions of the hollow fiber membrane 20 are potted to form a potting layer (not shown) and fixed. The potting layer may be formed by curing a liquid polymer such as a liquid polyurethane resin. The cartridge 21 may be detachably coupled to a fastening unit 13 of the housing 10. According to an embodiment, a plurality of the cartridges 21 may be mounted inside the housing 10.

The hollow fiber membrane 20 is formed of a material that allows moisture of the moisture-containing off-gas to penetrate. For example, the hollow fiber membrane 20 may be formed of a polymer membrane formed of polysulfone resin, polyethersulfone resin, sulfonated polysulfone resin, polyvinylidene fluoride (PVDF) resin, polyacrylonitrile (PAN) resin, polyimide resin, polyamideimide resin, polyesterimide resin, or a mixture of two or more thereof. The hollow fiber membrane 20 may be integrally attached to and detached from the housing 10 by being potted and fixed to the cartridge 21.

The cartridge 21 is formed with a first window 211 on one side through which the moisture-containing off-gas is introduced and is formed with a second window 212 on the other side through which the moisture-containing off-gas introduced through the cartridge 21 is discharged. With reference to FIG. 3, the first window 211 and the second window 212 may be formed in a plurality of rows in an up-down direction. The size and the number of rows of the first window 211 and the second window 212 may be variously changed. The moisture-containing off-gas introduced into the cartridge 21 through the first window 211 may flow to the rear end and be discharged to the outside through the second window 212. The moisture-containing off-gas discharged through the second window 212 may be discharged to the outside through an outlet 12 of the housing 10.

The first cap 30 is coupled to the one side of the housing 10. The first cap 30 may have an introduction hole 31 through which the external air is introduced. The second cap 40 is coupled to the other side of the housing 10, and the external air introduced through the first cap 30 flows through the hollow fiber membrane 20 while being humidified, and then discharged. The second cap 40 may have a discharge hole 41.

The ejection unit 50 is provided to cause the moisture-containing off-gas introduced through the inlet 11 to flow toward the outlet 12 using air pressure in a predetermined condition.

According to an embodiment, the ejection unit 50 may be provided inside the housing 10 in which the inlet 11 is formed. The ejection unit 50 may provide air pressure in a direction perpendicular to a direction in which the moisture-containing off-gas introduced through the inlet 11 flows. That is, according to an embodiment, the moisture-containing off-gas flows from an upper side to a lower side through the inlet 11 of the housing 10, and the ejection unit 50 provides air pressure in a horizontal direction.

In addition, according to an embodiment, the ejection unit 50 may eject air pressure toward a bypass hole 131 formed in the fastening unit 13 to which the cartridge 21 is fastened. The cartridge 21 may be fastened to the fastening unit 13 provided in the housing 10, and the fastening unit 13 is formed with the bypass hole 131 to cause the moisture-containing off-gas introduced through the inlet 11 to flow toward the outlet 12. The bypass hole 131 is provided to prevent a pressure inside the housing 10 from excessively increasing due to the moisture-containing off-gas. The moisture-containing off-gas is introduced into the cartridge 21 through the first window 211, and a predetermined flow rate may leak toward the outlet 12 through the bypass hole 131.

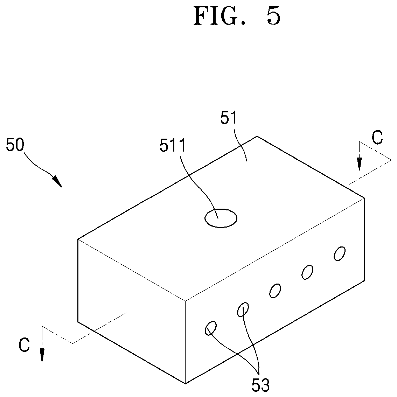

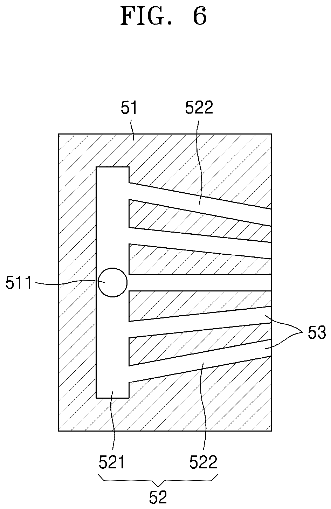

According to an embodiment, as shown in FIGS. 5 and 6, the ejection unit 50 includes a body unit 51, a supply flow path 52, and an ejection hole 53.

The body unit 51 may be fixed to the inside of the housing 10. As shown in FIG. 5, the body unit 51 may be formed in a rectangular parallelepiped shape. The shape of the body unit 51 is not limited thereto. An injection hole 511 into which gas is injected is formed in the body unit 51.

The supply flow path 52 is provided to distribute air pressure injected through the injection hole 511. The supply flow path 52 includes a main flow path 521 and a distribution flow path 522. According to an embodiment, the main flow path 521 extends in one direction, and the distribution flow path 522 extends from the main flow path 521 toward the bypass hole 131.

The ejection hole 53 is provided to eject air pressure, and is formed at the end portion of the distribution flow path 522. According to an embodiment, the ejection hole 53 includes a plurality of ejection holes that are spaced apart in the horizontal direction. In addition, as shown in FIG. 6, each of the ejection holes 53 is aligned to face the bypass hole 131. Since air pressure provided by the ejection unit 50 is directed toward the bypass hole 131, the moisture-containing off-gas can be effectively discharged through the bypass hole 131.

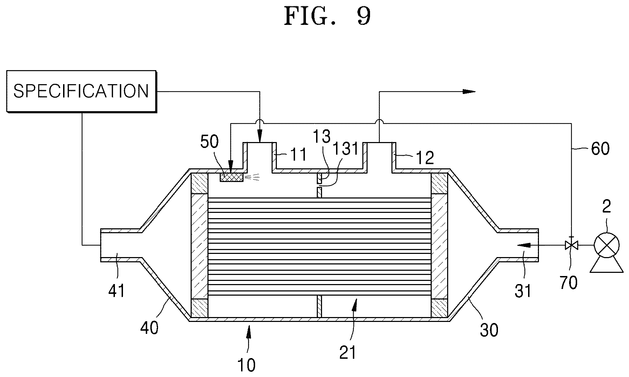

According to an embodiment, the ejection unit 50 uses an air pressure of the external air as air pressure. Specifically, air pressure of the ejection unit 50 is provided by being branched before the external air is introduced through the first cap 30. As shown in FIG. 9, a branch flow path 60 is provided at a front end of the first cap 30 to branch the external air toward the ejection unit 50. In addition, a flow rate control valve 70 is provided in the branch flow path 60 to control a flow rate of the branched external air. One end portion of the branch flow path 60 is connected to the front end of the first cap 30, and the other end portion is connected to the injection hole 511 of the body unit 51. On the other hand, FIG. 9 is different from FIG. 2 in the shapes of the first and second caps 30 and 40 of the membrane humidifier, and in the embodiment of FIG. 2, the branch flow path 60 can be formed to provide the external air from the front end of the first cap 30 toward the inlet 11.

According to an embodiment, a control unit 80 is provided to control a flow rate supplied by the ejection unit 50.

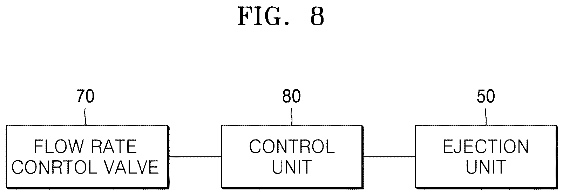

As shown in FIG. 8, the control unit 80 controls an opening degree of the flow rate control valve 70 to control the flow rate of the external air supplied toward the ejection unit 50. According to an embodiment, the control unit 80 may guide the external air toward the ejection unit 50 under the predetermined condition to allow the moisture-containing off-gas to be pushed toward the bypass hole 131 under the predetermined condition.

The control unit 80 may provide the external air to the ejection unit 50 for a predetermined time after startup. The predetermined time may be set to until 1 minute after the start. That is, the external air may be provided toward the ejection unit 50 through the branch flow path 60 until 1 minute after the start, and the ejection unit 50 may push the moisture-containing off-gas toward the bypass hole 131 using air pressure of the external air.

Although the predetermined time is not limited to 1 minute, when 1 minute has passed after the start and the initial operation period is finished, the moisture-containing off-gas leaking as it is through the bypass hole 131 rather decreases the humidification efficiency of the membrane humidifier, and when less than 1 minute after the start, preventing over-humidification as an initial operation condition increases the efficiency of the stack. Therefore, it is preferable to set the time to approximately 1 minute.

In addition, the control unit 80 may provide air pressure by the ejection unit 50 until the flow rate of the moisture-containing off-gas introduced through the inlet 11 reaches a predetermined volume after the start. The predetermined volume may be set to a flow rate of moisture-containing off-gas of 2,000 standard liters per minute (slpm). That is, the flow rate of moisture-containing off-gas introduced through the inlet 11 of the housing 10 from the stack increases after the start, and in the low-output period in which the flow rate of the moisture-containing off-gas reaches 2,000 slpm, the control unit 80 can push the moisture-containing off-gas toward the bypass hole 131 through the ejection unit 50.

Although the flow rate of the moisture-containing off-gas is not limited to 2,000 slpm, until the introduction flow rate of the moisture-containing off-gas reaches 2,000 slpm, the efficiency of the stack is improved by reducing the introduction of the moisture-containing off-gas into the housing 10 as the initial operation period to prevent over-humidification, and after the initial operation period, the bypass flow rate of the moisture-containing off-gas that leaks through the bypass hole 131 is reduced to provide sufficient humidified air.

In addition, according to an embodiment of the present disclosure, the control unit 80 can control such that the flow rate of the external air ejected by the ejection unit 50 gradually decreases until the above-described predetermined condition is reached. That is, the control unit 80 can gradually decrease the flow rate of the external air ejected by the ejection unit 50 until a predetermined time after a vehicle is started. For example, the control unit 80 can gradually decrease the flow rate of the external air ejected by the ejection unit 50 until 1 minute after the vehicle is started. At this time, the control unit 80 can control the flow rate of the branched external air by controlling the flow rate control valve 70.

In addition, the control unit 80 can gradually decrease the flow rate provided by the ejection unit 50 until the flow rate of the moisture-containing off-gas introduced through the inlet 11 reaches a predetermined set value after the vehicle is started. For example, the control unit 80 can gradually decrease the flow rate of the external air ejected by the ejection unit 50 until the flow rate of the moisture-containing off-gas generated in the stack and introduced into the housing 10 reaches 2,000 slpm after the vehicle is started. At this time, the control unit 80 can control the flow rate of the branched external air by controlling the flow rate control valve 70.

In this way, the control unit 80 gradually decreases the flow rate of the external air ejected by the ejection unit 50, to prevent air over-humidified by the membrane humidifier from being introduced into the stack during the initial operation and the low-output period, and smoothly change the operation state of the membrane humidifier such that normal humidification is possible after the initial operation period. Therefore, an effect of stably operating the system is achieved.

Hereinafter, the operation and effect of the membrane humidifier for a fuel cell according to the above configuration will be described in detail.

In a fuel cell for a vehicle, hydrogen and oxygen react in the stack when the vehicle engine is in operation, and the moisture-containing off-gas is generated. The moisture-containing off-gas is introduced into the housing 10 of the membrane humidifier to humidify air supplied to the stack. With reference to FIG. 7, the moisture-containing off-gas introduced through the inlet 11 of the housing 10 is introduced into the first window 211 of the cartridge 21, and flows through the outer surface of the hollow fiber membrane 20 provided in a bundle shape inside the cartridge 21 and is discharged toward the second window 212. The moisture-containing off-gas discharged to the second window 212 is discharged to the outside through the outlet 12 of the housing 10. On the other hand, a blower 2 introduces the external air into the housing 10 through the first cap 30, and the external air moves along the inside of the hollow fiber membrane 20, receives moisture from the moisture-containing off-gas, and is humidified. The humidified external air is discharged through the second cap 40 and supplied to the stack.

In a case where excessively humidified air is provided to the stack in the initial operation or the low-output environment, the power generation efficiency of the stack decreases. Therefore, the present disclosure reduces the humidification rate by pushing the moisture-containing off-gas toward the bypass hole 131 in the initial operation or the low-output environment during the process.

The control unit 80 branches the external air before the external air is introduced through the first cap 30 and ejects the external air through the ejection unit 50 until a predetermined time or until a predetermined set value of the flow rate of the moisture-containing off-gas discharged from the stack and introduced into the housing 10 is reached after the start. The predetermined time may be set to, for example, 1 minute as described above, and the predetermined set value of the moisture-containing off-gas may be set to 2,000 slpm. The control unit may stop the operation of supplying the external air through the ejection unit 50 in a case where any one of the two conditions is achieved.

The moisture-containing off-gas introduced through the inlet 11 by the ejection unit 50 is pushed toward the bypass hole 131, and the moisture-containing off-gas flows toward the outlet 12 through the bypass hole 131. As a result, the amount of moisture-containing off-gas introduced through the hollow fiber membrane 20 of the cartridge 21 is reduced. As a result, since the humidification rate of the external air is lowered, excessively humidified air can be prevented from being introduced into the stack through the membrane humidifier in the initial operation or the low-output environment.

In addition, it is possible to provide an effect of preventing the external air from being additionally humidified and over-humidified by the condensate inside the membrane humidifier during the initial operation and the low-output period. The condensate is generated inside the membrane humidifier in the process in which the moisture-containing off-gas comes into contact with the housing 10, the outer surface of the hollow fiber membrane 20, and the surface of the cartridge 21. In a case where the moisture-containing off-gas is introduced into the housing 10, the condensate inside the housing 10 may transfer moisture to the external air flowing through the hollow fiber membrane 20 together with the moisture-containing off-gas, which may cause over-humidification. The present disclosure can additionally prevent the moisture of the condensate remaining inside the housing 10 from being transferred to the external air by relatively reducing the pressure of the moisture-containing off-gas by pushing the moisture-containing off-gas toward the bypass hole 131. Through the series of processes described above, the membrane humidifier according to the present disclosure contributes to improving the efficiency of the fuel cell stack.

Although the present disclosure has been described in detail with reference to preferred embodiments, the present disclosure is not limited to the above embodiments, and various modifications may be provided within a range that does not depart from the scope of the present disclosure.

## Claims

1. A membrane humidifier for a fuel cell comprising:
a housing having an inlet formed on one side through which a moisture-containing off-gas is introduced and having an outlet formed on another side through which the moisture-containing off-gas introduced through the inlet is discharged;
a first cap coupled to the one side of the housing and through which external air is introduced;
a plurality of hollow fiber membranes provided inside the housing, through which the external air introduced through the first cap flows, and in which the moisture-containing off-gas comes into contact with an outer surface to humidify the external air;
an ejection unit that causes the moisture-containing off-gas introduced through the inlet to flow toward the outlet using air pressure under a predetermined condition; and
a second cap which is coupled to the other side of the housing and in which the external air is humidified and discharged while flowing through the hollow fiber membranes.

2. The membrane humidifier for a fuel cell according to claim 1, wherein
the plurality of hollow fiber membranes are provided inside a cartridge that is detachably coupled to the housing,
a fastening unit for fastening the cartridge is provided in the housing,
a bypass hole through which the moisture-containing off-gas introduced through the inlet flows toward the outlet is formed in the fastening unit, and the ejection unit ejects air pressure toward the bypass hole.

3. The membrane humidifier for a fuel cell according to claim 1, wherein
air pressure of the ejection unit is provided by being branched before the external air is introduced through the first cap.

4. The membrane humidifier for a fuel cell according to claim 3, further comprising:
a branch flow path provided at a front end of the first cap to branch the external air toward the ejection unit; and
a flow rate control valve provided in the branch flow path to control a flow rate of the branched external air.

5. The membrane humidifier for a fuel cell according to claim 1, wherein
the ejection unit is provided with a plurality of ejection holes that provide air pressure, and
the ejection holes are provided to be spaced apart in a horizontal direction.

6. The membrane humidifier for a fuel cell according to claim 5, wherein
each of the ejection holes is aligned to face the bypass hole.

7. The membrane humidifier for a fuel cell according to claim 1, further comprising:
a control unit that controls a flow rate supplied by the ejection unit.

8. The membrane humidifier for a fuel cell according to claim 7, wherein
the control unit
1) provides air pressure by the ejection unit until 1 minute after startup, or
2) provides air pressure by the ejection unit until a flow rate of the moisture-containing off-gas introduced through the inlet reaches 2,000 standard liters per minute (slpm) after the start.

9. The membrane humidifier for a fuel cell according to claim 1, wherein
a flow rate provided by the ejection unit gradually decreases until a predetermined time after a vehicle is started.

10. The membrane humidifier for a fuel cell according to claim 1, wherein
a flow rate provided by the ejection unit gradually decreases until a flow rate of the moisture-containing off-gas introduced through the inlet reaches a predetermined set value after a vehicle is started.
